# EUROPÄISCHE PATENTANMELDUNG

(11) **EP 2 578 092 A2**
(43) Veröffentlichungstag der Anmeldung: **10.04.2013**
(21) Anmeldenummer: 12187471.3
(22) Anmeldetag: 05.10.2012
(51) Int. Cl.: A24C 5/352, B65G 1/04

(54) **Anordnung zum Herstellen, Speichern und Transportieren von Produkten der Tabak verarbeitenden Industrie**

(30) Priorität: 07.10.2011 DE 102011054310
(71) Anmelder: Hauni Maschinenbau AG, 21033 Hamburg (DE)
(72) Erfinder: Becker, Carsten, 21465 Wentorf (DE); Tracht, Knut, 21493 Schwarzenbek (DE); Horn, Matthias, 22926 Ahrensburg (DE); Kitzing, Walter, 25421 Pinneberg (DE); Krößmann, Jürgen, 21493 Schwarzenbek (DE); Knepper, Thorsten, 21493 Schwarzenbek (DE); Busse-Riepshoff, Uwe, 21244 Buchholz (DE)
(74) Vertreter: Stork Bamberger

(57) **Zusammenfassung**

Die Erfindung betrifft eine Anordnung (10) zum Herstellen, Speichern und Transportieren von Produkten der Tabak verarbeitenden Industrie, umfassend mindestens eine Produktionsvorrichtung (11) zum Herstellen von Zwischenprodukten der Tabak verarbeitenden Industrie, mindestens eine Produktionsvorrichtung (12) zum Herstellen von Fertigprodukten der Tabak verarbeitenden Industrie, ein Speicher- und Transportsystem (13), das zum Speichern und Transportieren von zur Herstellung von Produkten der Tabak verarbeitenden Industrie erforderlichen Materialien und/oder von hergestellten Zwischenprodukten und/oder Fertigprodukten der Tabak verarbeitenden Industrie in oder auf Ladegutträgern (15) innerhalb der Anordnung (10) ausgebildet und eingerichtet ist, und mindestens eine Station (14) zum Ändern des Füllstandes der Ladegutträger (15), wobei das Speicher- und Transportsystem (13) die mindestens eine Produktionsvorrichtung (11) zum Herstellen von Zwischenprodukten der Tabak verarbeitenden Industrie, die mindestens eine Produktionsvorrichtung (12) zum Herstellen von Fertigprodukten der Tabak verarbeitenden Industrie und die mindestens eine Station (14) zum Ändern des Füllstandes der Ladegutträger (15) miteinander verbindet, die sich dadurch auszeichnet, dass das Speicher- und Transportsystem (13) als Überkopf-System ausgebildet ist und neben mindestens einem Lagerregal (18) zur Aufnahme mindestens eines Ladegutträgers (15) ein Schienennetz (19) sowie mindestens ein auf dem Schienennetz (19) selbständig verfahrbares Transportfahrzeug (20) umfasst, wobei das oder jedes Transportfahrzeug (20) zur Aufnahme und Abgabe der Ladegutträger (15) oberhalb der Schienenebene ausgebildet ist.

## Beschreibung

Die Erfindung betrifft eine Anordnung zum Herstellen, Speichern und Transportieren von Produkten der Tabak verarbeitenden Industrie, umfassend mindestens eine Produktionsvorrichtung zum Herstellen von Zwischenprodukten der Tabak verarbeitenden Industrie, mindestens eine Produktionsvorrichtung zum Herstellen von Fertigprodukten der Tabak verarbeitenden Industrie, ein Speicher- und Transportsystem, das zum Speichern und Transportieren von zur Herstellung von Produkten der Tabak verarbeitenden Industrie erforderlichen Materialien und/oder von hergestellten Zwischenprodukten und/oder Fertigprodukten der Tabak verarbeitenden Industrie in oder auf Ladegutträgern innerhalb der Anordnung ausgebildet und eingerichtet ist, und mindestens eine Station zum Ändern des Füllstandes der Ladegutträger, wobei das Speicher- und Transportsystem die mindestens eine Produktionsvorrichtung zum Herstellen von Zwischenprodukten der Tabak verarbeitenden Industrie, die mindestens eine Produktionsvorrichtung zum Herstellen von Fertigprodukten der Tabak verarbeitenden Industrie und die mindestens eine Station zum Ändern des Füllstandes der Ladegutträger miteinander verbindet.

Solche Anordnungen kommen in der Tabak verarbeitenden Industrie in unterschiedlichen Zusammenstellungen und Größen vor. Die Tabak verarbeitenden Industrie betrifft nicht nur die Herstellung von Tabak enthaltenden Zwischenprodukten und Fertigprodukten sondern explizit auch die Herstellung von (Zwischen-)Produkten, die keinen Tabak enthalten müssen, wie z.B. die Filter. Die gattungsgemäße Anordnung schließt neben Anordnungen z.B. zur Herstellung von Zigaretten oder Filterzigaretten somit z.B. auch solche Anordnungen ein, die ausschließlich auf die Herstellung von Filtern oder Multisegmentfiltern gerichtet sind. Als Bestandteil solcher Anordnungen sind als Produktionsvorrichtungen sowohl Herstellungsmaschinen, beispielsweise des Typs KDF, PROTOS, MERLIN aus dem Hause der Anmelderin, als auch Weiterverarbeitungsmaschinen, beispielsweise des Typs MAX, MERLIN aus dem Hause der Anmelderin, sowie Packmaschinen und Filterstabsendestationen, aus dem Hause der Anmelderin z.B. unter dem Typ FILTROMAT bekannt, üblich. Mit der Herstellung von Produkten der Tabak verarbeitenden Industrie ist die Herstellung bzw. Produktion sowohl aller Zwischenprodukte als auch aller Fertigprodukte gemeint. Rein beispielhaft sind als Zwischenprodukte, auch Halbfertigprodukte genannt, z.B. Filter, Filtersegmente, Multifilter, Tabakstöcke oder dergleichen zu nennen. Die Fertigprodukte können beispielsweise Zigaretten, Zigarettenpackungen, aus mehreren Zigarettenpackungen gebildete Zigarettenstangen und weitere in der Tabak verarbeitenden Industrie übliche Fertig- oder Endprodukte sein. Allerdings können die weiter oben genannten Zwischenprodukte auch Fertigprodukte sein. Dies wird aus folgenden Beispielen einer gattungsgemäßen Anordnung deutlich. Rein beispielhaft können Filtersegmente als Zwischenprodukt hergestellt werden, die dann zu Multisegmentfiltern als Endprodukt weiterverarbeitet werden. Ein anderes Beispiel betrifft die Herstellung von Filtern als Zwischenprodukt, die zur Herstellung von Filterzigaretten als Fertigprodukt weiterverarbeitet werden. Auch können Zigaretten als Zwischenprodukt hergestellt werden, die zu Zigarettenverpackungen als Fertigprodukt weiterverarbeitet werden. Diese unvollständige Aufzählung gibt nur einige Beispiele der gattungsgemäßen Anordnung wieder.

Grundsätzlich ist es sinnvoll und/oder notwendig, die Zwischenprodukte oder Fertigprodukte zwischenzuspeichern. Dazu werden die Zwischenprodukte oder Fertigprodukte an den jeweiligen Produktionsvorrichtungen in Ladegutträger gefüllt, in den Speicher zu einem Speicherplatz transportiert, zur Weiterverarbeitung wieder an eine Produktionsvorrichtung transportiert und dort entleert, weshalb an den Produktionsvorrichtungen entsprechende Stationen zum Befüllen und/oder Entleeren der Ladegutträger vorgesehen sind. Das Speichern und Transportieren betrifft neben den Zwischenprodukten und den Fertigprodukten als Produkte der Tabak verarbeitenden Industrie auch alle Materialien und Zutaten, die bei der Herstellung der Zwischenprodukte und Fertigprodukte erforderlich sind, wie z.B. Schüttgut (z.B. Tabakfasern, Filtermaterialien) als Fasermaterial, Kapseln, Zusatzstoffe, Zusatzelemente, Bobinen mit Belagpapier oder Umhüllungspapier oder dergleichen, aber auch Verpackungen, Versandkartons, Gebinde etc. Mit anderen Worten können auch diese Materialien und Zutaten in oder auf Ladegutträgern gelagert und zur Weiterverarbeitung aus dem Speicher an die Produktionsvorrichtungen transportiert werden.

Um alle diese Produkte der Tabak verarbeitenden Industrie, also die Zwischenprodukte, die Fertigprodukte, aber auch die bei der Herstellung dieser Zwischenprodukte und Fertigprodukte eingesetzten Materialien und Zutaten einem Speicher zuzuführen bzw. aus dem Speicher an die jeweiligen Produktionsvorrichtungen zu transportieren, sind Transportsysteme bekannt, mittels denen die Produkte, die in oder auf den Ladegutträgern lagern, von einer Produktionsvorrichtung an einen Speicherplatz in dem Speicher und von einem Speicherplatz des Speichers an eine Produktionsvorrichtung gefördert werden. Das Speicher- und Transportsystem bildet quasi das Bindeglied zwischen den einzelnen Produktionsvorrichtungen. Anders ausgedrückt verbindet das Speicher- und Transportsystem die Produktionsvorrichtungen zur Herstellung der Zwischenprodukte und der Fertigprodukte und die Stationen zum Befüllen und/oder Entleeren der Ladegutträger miteinander, so dass eine Art geschlossenes Logistik-System mit mindestens einem Zugang und mindestens einem Ausgang gebildet ist.

Als Speicher- und Transportsystem sind im Stand der Technik z.B. Schrank- oder Regalsysteme (als Speicher mit mindestens einem Speicherplatz) mit Fächern zur Aufnahme einzelner oder zu Gruppen zusammengestellter Ladegutträger bekannt, wobei die Produkte direkt oder indirekt über die Ladegutträger mittels eines Handhabungs- bzw. Transportsystems innerhalb der Anordnung transportiert werden. Als Handhabungs- bzw. Transportsysteme sind aus dem Stand der Technik beispielsweise so genannte Flurfördersysteme bekannt. Bei diesen Systemen werden die Transportfahrzeuge auf dem Boden entlang im Boden angeordneter Führungen bzw. Schleifenführungen angetrieben und bewegt. Solche Systeme weisen jedoch neben einem sehr hohen Platzbedarf am Boden den weiteren Nachteil auf, dass die führerlosen Transportfahrzeuge eine Gefahr für sich im Bereich der Anordnung befindliche Personen darstellen. Des Weiteren ist ein solches Transportsystem nur in einer Ebene (am Boden) aktiv einsetzbar, was die Einsatzmöglichkeiten beschränkt. Ein entsprechendes Flurfördersystem ist z.B. in der deutschen Offenlegungsschrift DE 25 38 567 beschrieben.

Aus dem Stand der Technik ist weiterhin bekannt, Hängefördersysteme als Transportsysteme einzusetzen. Die deutsche Offenlegungsschrift DE 2 107 825 beschreibt ein Gondelsystem, bei dem die Ladegutträger hängend transportiert werden. Dies hat jedoch den Nachteil, dass die in oder auf den Ladegutträgern befindlichen Produkte dazu neigen, mit den Gondeln zu pendeln oder zu schwingen, was insbesondere bei stabförmigen Artikeln, also Artikeln mit einem runden oder im Wesentlichen runden Querschnitt, wie z.B. Filtern, Filtersegmenten, Tabakstöcken und dergleichen, dazu führt, dass diese sich innerhalb des Ladegutträgers verschieben und querlegen. Man spricht in diesem Zusammenhang auch von so genannten Querfliegern.

Der Erfindung liegt daher die Aufgabe zugrunde, eine sichere Anordnung zum Herstellen, Speichern und Transportieren von Produkten der Tabak verarbeitenden Industrie zu schaffen, die einerseits platzsparend ist und andererseits einen zuverlässigen und stabilen Transport innerhalb der Anordnung gewährleistet.

Dies Aufgabe wird durch eine Anordnung der eingangs genannten Art dadurch gelöst, dass das Speicher- und Transportsystem als Überkopf-System ausgebildet ist und neben mindestens einem Lagerregal zur Aufnahme mindestens eines Ladegutträgers ein Schienennetz sowie mindestens ein auf dem Schienennetz selbständig verfahrbares Transportfahrzeug umfasst, wobei das oder jedes Transportfahrzeug zur Aufnahme und Abgabe der Ladegutträger oberhalb der Schienenebene ausgebildet ist. Diese erfindungsgemäße Ausgestaltung mit einem vom Boden gelösten, also oberhalb der Bodenebene wirkenden Transportförderer als Überkopf-System, das üblicherweise auch als "overhead"-Förderer bezeichnet wird, ist deutlich platzsparender als ein Flurfördersystem und vermeidet zudem die Gefahr von Kollisionen mit einer Bedienperson. Neben den Vorteilen gegenüber den Flurfördersystemen werden durch die erfindungsgemäße Ausgestaltung auch die Nachteile der Hängefördersysteme überwunden. Durch das Schienennetz wird ein stabiler und sicherer Transport der Ladegutträger sichergestellt. Das auf dem Schienennetz selbständig verfahrbare Transportfahrzeug ermöglicht einen schwingungsarmen und ruckelfreien Transport, so dass Querflieger in den Ladegutträgern wirksam vermieden werden. Durch die Ausbildung der Transportfahrzeuge zur Aufnahme und Abgabe der Ladegutträger oberhalb der Schienenebene werden die Platzersparnis und insbesondere die Zugänglichkeit verbessert, was den gesamten Betrieb der Anordnung vereinfacht.

Eine zweckmäßige Weiterbildung der Erfindung ist dadurch gekennzeichnet, dass entlang des Schienennetzes mehrere Lagerregale angeordnet sind, wobei jedem Lagerregal mindestens eine Lifteinrichtung zugeordnet ist. Damit ist das Speicher- und Transportsystem über mehrere übereinander liegende Speicherebenen ausdehnbar, was einerseits wiederum eine Platzersparnis bedeutet und andererseits das Speichervolumen erhöht. Durch die Lifteinrichtungen, die an das Schienennetz angebunden bzw. in das Schienennetz eingebunden sind, können die Transportfahrzeuge sicher und einfach zwischen mehreren Lagerregalen in einer Ebene aber insbesondere auch zwischen unterschiedlichen Ebenen eines Lagerregals selbständig hin und her fahren.

Vorzugsweise ist jedes Transportfahrzeug ferngesteuert und schienengebunden ausgebildet. Diese Ausbildung erhöht die Flexibilität bei der Beschickung entweder der Lagerregale oder der Produktionsvorrichtungen mit den Ladegutträgern und stellt eine einfache und sichere Handhabung bzw. einen sicheren und schnellen Transport der Ladegutträger zwischen den Lagerregalen und den Produktionsvorrichtungen sicher.

Eine bevorzugte Weiterbildung der Erfindung zeichnet sich dadurch aus, dass jedes Transportfahrzeug bezüglich seiner Energieversorgung autark, beispielsweise mittels eines Akkumulators, ausgebildet ist. Dadurch wird zum einen ebenfalls die Flexibilität erhöht und damit die Handhabung vereinfacht. Zum anderen gewährleistet diese Ausführungsform, dass mögliche Ausfälle einzelner Transportfahrzeuge einfacher und besser kompensiert werden können.

Vorteilhafterweise ist dem Schienennetz mindestens eine Ladestation für das oder jedes Transportfahrzeug zugeordnet. Mit der Zuordnung mindestens einer Ladestation an das Schienennetz, vorzugsweise sind mehrere Ladestationen vorgesehen, ist die Aufrechterhaltung des Dauerbetriebs des Speicher- und Transportsystems auf besonders einfache und platzsparende Weise gewährleistet.

Eine weitere zweckmäßige Ausbildung der Erfindung ist dadurch gekennzeichnet, dass jedes Transportfahrzeug auf seiner dem Schienennetz abgewandten Oberseite einen Querförderer zum Aufnehmen und Abgeben der Ladegutträger quer zur Fahrtrichtung des Transportfahrzeugs aufweist. Dadurch, dass die Transportfahrzeuge ihre Last, nämlich die vollen oder leeren Ladegutträger, oberhalb der Schienenebene tragen, wobei die Ladegutträger auf dem Querförderer stehen, ist auf engstem Raum eine Entladung und Beladung des Transportfahrzeugs mit einem Ladegutträger oder einer aus mehreren Ladegutträgern gebildeten Gruppe möglich. Dadurch, dass die Querförderer aktiv angetrieben sind, also einen aktiven Transport der Ladegutträger vom Transportfahrzeug und auf das Transportfahrzeug ermöglichen, ist die Handhabung ohne zusätzliche Handhabungskomponenten auf einfache und sichere Weise sichergestellt.

Vorzugsweise ist das Schienennetz wahlweise als Einschienen- oder Zweischienensystem ausgebildet. Mit einem Einschienensystem wird eine besonders einfache und kostengünstige Variante vorgeschlagen, die auch besonders platzsparend ist. Das Schienennetz als Zweischienensystem gewährleistet einen besonders stabilen und damit die Produkte schonenden Transport.

Vorteilhafterweise umfasst das Schienennetz eine Stromschiene. Diese Lösung ermöglicht eine einfache und zuverlässige Energieversorgung der Transportfahrzeuge, so dass diese mit einfachen Mitteln selbständig verfahrbar sind.

Eine besonders vorteilhafte Variante der Erfindung ist dadurch gekennzeichnet, dass einer oder jeder Produktionsvorrichtung zum Herstellen von Zwischenprodukten der Tabak verarbeitenden Industrie und/oder einer oder jeder Produktionsvorrichtung zum Herstellen von Fertigprodukten der Tabak verarbeitenden Industrie und/oder einer oder jeder Station zum Ändern des Füllstandes der Ladegutträger direkt und unmittelbar benachbart ein Pufferspeicher für Ladegutträger zugeordnet ist. Solche Pufferspeicher, die auch als Zwischenspeicher bezeichnet werden und am Transportweg der Transportfahrzeuge liegen, ermöglichen die einfache Schaffung zusätzlicher Speicherplätze, um insbesondere kurzfristige Produktionsschwankungen ausgleichen zu können. Direkt und unmittelbar bedeutet in diesem Zusammenhang, dass diese zusätzlichen Pufferspeicher näher an den Produktionsmaschinen und den Stationen zum Befüllen und/oder Entleeren der Ladegutträger liegen als die eigentlichen Lagerregale. Diese lokalen und benachbart zu den Produktionsvorrichtungen und/oder den Stationen zum Entleeren und/oder Befüllen der Ladegutträger angeordneten Pufferspeicher stellen somit eine schnelle Verfügbarkeit mit Materialien/Zutaten zur Herstellung der Produkte der Tabak verarbeitenden Industrie und/oder Zwischenprodukten und/oder Fertigprodukten sicher.

Bevorzugt sind die Pufferspeicher jeweils als Stellplatz für Ladegutträger und/oder als an das Schienennetz angeschlossener und von dem oder jedem Transportfahrzeug befahrbarer Schienenabschnitt ausgebildet. Der Stellplatz als eine Art passiver Pufferspeicher für Ladegutträger, beispielsweise auf einem Tablett oder dergleichen, ist besonders einfach und kostengünstig. Der befahrbare Schienenabschnitt als Pufferspeicher für mit einem Ladegutträger oder mehreren Ladegutträgern beladene Transportfahrzeuge, in der Art eines Abstellgleises für Transportfahrzeuge, ist besonders schnell zugriffsbereit und im Übrigen platzoptimierend nahe den Produktionsvorrichtungen und/oder den Stationen zum Befüllen und/oder Entleeren der Ladegutträger zu positionieren.

In einer weiteren zweckmäßigen Weiterbildung der Erfindung sind die Ladegutträger Schragen zur Aufnahme stabförmiger Artikel und das Speicher- und Transportsystem ist als Schragenspeicher- und Schragentransportsystem für aus mindestens zwei Schragen gebildete Schragengruppen, welche auf einer gemeinsamen Unterlage angeordnet sind, ausgebildet und eingerichtet. Die Schragen eignen sich besonders gut zur Aufnahme und zum Transport stabförmiger Artikel, wie sie in der Tabak verarbeitenden Industrie anfallen. Einzelne Schragen und insbesondere Schragengruppen werden bevorzugt bei der Herstellung, der Speicherung und dem Transport der stabförmigen Artikel eingesetzt, weshalb die Anordnung in besonderer Weise auf diese Art Ladegutträger abgestimmt ist.

Vorteilhafterweise ist einer oder jeder Produktionsvorrichtung zum Herstellen von Zwischenprodukten der Tabak verarbeitenden Industrie und/oder einer oder jeder Produktionsvorrichtung zum Herstellen von Fertigprodukten der Tabak verarbeitenden Industrie und/oder einer oder jeder Station zum Ändern des Füllstandes der Ladegutträger ein Übergabemodul zur Anbindung an das Schienennetz zugeordnet. Dieses Übergabemodul, das auch als Einzelmodul und insbesondere als Nachrüstsatz für bestehende Anordnungen separat einsetzbar ist, ermöglicht die einfache und sichere Übergabe der Ladegutträger aus dem Lagerregal und/oder von der dem Lagerregal zugeordneten Lifteinrichtung an die Stationen zum Befüllen und/oder Entleeren der Ladegutträger und umgekehrt. Konkret werden volle Schragen oder Schragengruppen aus dem Lagerregal an eine Entleerstation und leere Schragen oder Schragengruppen von der Entleerstation an das Lagerregal bzw. leere Schragen oder Schragengruppen an eine Befüllstation und volle Schragen oder Schragengruppen von der Befüllstation an das Lagerregal übergeben. Durch das erfindungsgemäße Übergabemodul ist dieser Transfer automatisiert und sicher möglich.

Vorteilhafterweise umfasst das Übergabemodul zwei übereinander angeordnete Förderelemente, die jeweils liftartig auf und ab bewegbar ausgebildet sind. Mit der Anordnung zweier übereinander angeordneter Förderelemente ist es möglich, die auf unterschiedlichen Ebene in den Stationen zum Befüllen und/oder Entleeren befindlichen vollen Schragen/Schragengruppen einerseits und leeren Schragen/Schragengruppen andererseits gleichzeitig bzw. zeitgleich zu übertragen, was die Handhabung vereinfacht und insbesondere die Übergabezeit verkürzt.

Optional kann das Übergabemodul auch zwei nebeneinander angeordnete Förderelemente umfassen, die jeweils liftartig auf und ab bewegbar ausgebildet sind. Mit dieser Anordnung kann eine alternative Lösung angeboten werden, sollte es in der Höhe Platzprobleme geben. Des Weiteren ermöglicht diese Ausführungsform auch die Anpassung an bzw. die Kopplung mit Stationen zum Ändern des Füllstandes von Ladegutträgern, die einen Transport der leeren und vollen Ladegutträger nebeneinander vorsehen.

In einer bevorzugten Weiterbildung der Erfindung ist ein oder jedes Förderelement ein umlaufender Transportförderer, der zur hängenden Aufnahme der Ladegutträger ausgebildet und eingerichtet ist. Durch die Ausbildung als umlaufender Transportförderer einerseits und die Verstellbarkeit in vertikaler Richtung andererseits ist es auf besonders einfache und sichere Weise möglich, die Ladegutträger vom Zuführband oder Abförderband der jeweiligen Station zum Befüllen und/oder Entleeren der Schragen zu übernehmen und einem Transportfahrzeug zuzuführen und umgekehrt. Durch die Ausbildung zur hängenden Aufnahme der Ladegutträger und insbesondere der Schragen ist das Abheben und Umsetzen der Ladegutträger von der Befüll- oder Entleerstation auf ein Transportfahrzeug und umgekehrt besonders einfach und sicher. Zudem stellt diese Ausbildung eine kostengünstige Lösung dar.

Zweckmäßigerweise ist ein oder jedes Förderelement schwenkbar ausgebildet, derart, dass die Neigung der Förderebene zur horizontalen Ebene verstellbar ist. Damit ist eine Anpassung des Übergabemoduls an unterschiedliche Zuförderer und Abförderer und insbesondere deren jeweilige Neigung anpassbar, was die Übernahme der Ladegutträger erleichtert.

In einer weiteren bevorzugten Ausführungsform umfasst das oder jedes Förderelement Ausrichtmittel zum seitlichen Ausrichten der Ladegutträger. Dadurch ist eine exakte Übernahme und Abgabe der Ladegutträger gewährleistet. Insbesondere stellen solche Ausrichtmittel sicher, dass die Ladegutträger sicher auf dem Förderelement transportiert werden können.

Weitere vorteilhafte und zweckmäßige Merkmale und Weiterbildungen der Erfindung ergeben sich aus den Unteransprüchen und der Beschreibung. Besonders bevorzugte Ausführungsformen und Details der erfindungsgemäßen Anordnung werden anhand der beigefügten Zeichnung näher erläutert. In der Zeichnung zeigt:
- Fig. 1: eine schematische Darstellung einer erfindungsgemäßen Anordnung in Draufsicht,

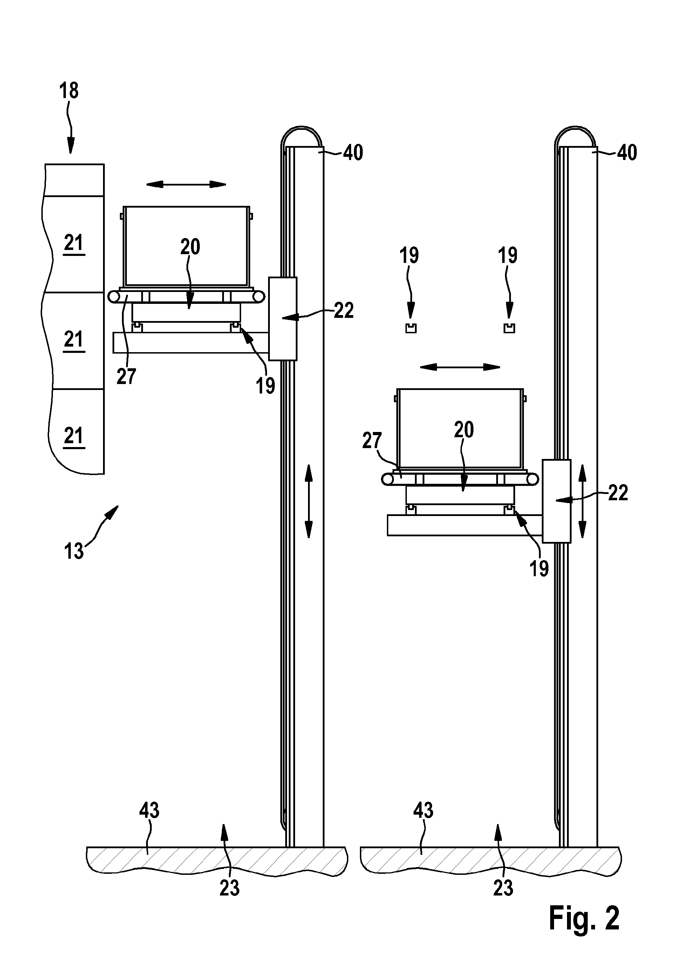

- Fig. 2: eine schematische Darstellung von Teilen des Speicher- und Transportsystems mit Lifteinrichtungen in Seitenansicht,
- Fig. 3: eine erste Ausführungsform eines Transportfahrzeugs,
- Fig. 4: eine weitere Ausführungsform eines selbständig verfahrbaren Transportfahrzeugs,
- Fig. 5: eine weitere Ausführungsform eines selbständig verfahrbaren Transportfahrzeugs,
- Fig. 6: eine schematische Darstellung einer ersten Ausführungsform des Übergabemoduls zwischen dem Speicher- und Transportsystem und einer Station zum Befüllen von Schragen,
- Fig. 7: eine schematische Darstellung des Übergabemoduls der Figur 6 zwischen dem Speicher- und Transportsystem und einer Station zum Entleeren von Schragen,
- Fig. 8: eine schematische Darstellung einer weiteren Ausführungsform des Übergabemoduls zwischen dem Speicher- und Transportsystem und einer Station zum Befüllen von Schragen, und
- Fig. 9: eine schematische Darstellung des Übergabemoduls der Figur 8 zwischen dem Speicher- und Transportsystem und einer Station zum Entleeren von Schragen

Die Erfindung betrifft eine Anordnung zum Herstellen, Speichern und Transportieren von Produkten der Tabak verarbeitenden Industrie. Das Speichern und Transportieren der Produkte umfasst sowohl Zwischenprodukte als auch Fertigprodukte und insbesondere auch alle Materialien, die zur Herstellung der Zwischenprodukte und Fertigprodukte erforderlich sind. Anders ausgedrückt befasst sich die Erfindung mit einem Transport- und Beschickungssystem für wenigstens eine Produktionslinie für Zwischenprodukte sowie wenigstens eine Produktionslinie für Fertigprodukte der Tabak verarbeitenden Industrie. Typischerweise sind Zwischenprodukte Filter, Filtersegmente, Multisegmentfilter, Tabakstöcke und dergleichen. Als Fertigprodukte zählen üblicherweise Filterzigaretten, Zigarettenpackungen, aus mehreren Zigarettenpackungen gebildete Zigarettenstangen und dergleichen. Selbstverständlich können beispielsweise aber auch Multisegmentfilter ein Fertigprodukt darstellen und Filterzigaretten ein Zwischenprodukt bilden. Mit den Begrifflichkeiten Zwischenprodukte und Fertigprodukt werden also keine Festlegungen auf bestimmte Produktgruppen vorgenommen. Typische Materialien, die zur Herstellung solcher Zwischenprodukte und Fertigprodukte erforderlich sind, sind z.B. Schüttgüter, wie z.B. Tabak oder Filtermaterialien, Zusatzstoffe, Zusatzelemente, wie z.B. Kapseln, Packungen, Gebinde, Versandkartons, Bobinen und dergleichen.

Die erfindungsgemäße Anordnung 10 zum Herstellen, Speichern und Transportieren von Produkten der Tabak verarbeitenden Industrie umfasst mindestens eine Produktionsvorrichtung 11 zum Herstellen von Zwischenprodukten der Tabak verarbeitenden Industrie, mindestens eine Produktionsvorrichtung 12 zum Herstellen von Fertigprodukten der Tabak verarbeitenden Industrie, ein Speicher- und Transportsystem 13 und mindestens eine Station 14 zum Ändern des Füllstandes von Ladegutträgern 15. Das Speicher- und Transportsystem 13 ist zum Speichern und Transportieren von zur Herstellung von Produkten der Tabak verarbeitenden Industrie erforderlichen Materialien und/oder von hergestellten Zwischenprodukten und/oder Fertigprodukten der Tabak verarbeitenden Industrie in oder auf Ladegutträgern 15 innerhalb der Anordnung 10 ausgebildet und eingerichtet. Die Station 14 zum Ändern des Füllstandes der Ladegutträger 15 ist vorzugsweise eine Befüllstation 16 zum Befüllen der Ladegutträger 15 mit Zwischenprodukten oder Fertigprodukten der Tabak verarbeitenden Industrie oder eine Entleerstation 17 zum Entleeren von mit Zwischenprodukten, Fertigprodukten oder den zur Herstellung von Produkten der Tabak verarbeitenden Industrie erforderlichen Materialien befüllten Ladegutträgern 15. Das Speicher- und Transportsystem 13 verbindet die mindestens eine Produktionsvorrichtung 11 zum Herstellen von Zwischenprodukten der Tabak verarbeitenden Industrie, die mindestens eine Produktionsvorrichtung 12 zum Herstellen von Fertigprodukten der Tabak verarbeitenden Industrie und die mindestens eine Station 14 zum Ändern des Füllstandes der Ladegutträger 15 miteinander. Mit anderen Worten umfasst die Anordnung 10 ein vernetztes Logistik-System, in dem Ladegutträger 15 an Produktionsvorrichtungen 11, 12 befüllt oder entleert und die vollen oder leeren Ladegutträger 15 zwischen den Produktionsvorrichtungen 11, 12 bzw. der oder jeder den Produktionsvorrichtungen 11, 12 zugeordneten Station 14 zum Ändern des Füllstandes einerseits und dem Speicher bzw. den Speicherplätzen für die Ladegutträger 15 in dem Speicher andererseits automatisch transportiert werden. Als Ladegutträger 15 eignen sich besonders gut so genannte Schragen, die insbesondere zur Aufnahme und zum Transport stabförmiger Artikel, also länglichen und üblicherweise mit einem runden oder im Wesentlichen runden Querschnitt ausgebildeten Artikeln der Tabak verarbeitenden Industrie, ausgebildet und eingerichtet sind. Ladegutträger 15 können aber auch Tabletts, Dornaufnahmen, Paletten, Boxen, Behälter oder andere Gefäße sein.

Die beschriebene Anordnung 10 zeichnet sich erfindungsgemäß dadurch aus, dass das Speicher- und Transportsystem 13 als Überkopf-System ausgebildet ist und neben mindestens einem Lagerregal 18 zur Aufnahme mindestens eines Lagergutträgers 15 ein Schienennetz 19 sowie mindestens ein auf dem Schienennetz 19 selbständig verfahrbares Transportfahrzeug 20 umfasst, wobei das oder jedes Transportfahrzeug 20 zur Aufnahme und Abgabe der Ladegutträger 15 oberhalb der Schienenebene ausgebildet ist. Das Schienennetz 19 ist oberhalb des Bodens 43, auf dem die Anordnung 10 aufgebaut ist, zur Bildung des "overhead"-Systems angeordnet. Das mindestens eine Lagerregal 18 ist entlang des Transportweges des oder jedes Transportfahrzeugs 20 angeordnet, so dass das Transportfahrzeug 20 zum Beladen und Entladen mit einem oder mehreren Ladegutträgern 15 vor einen Lagerplatz 21 des Lagerregals 18 verfahrbar ist. Das Schienennetz 19 bindet demnach das oder jedes Lagerregal 18 mit den entsprechenden Lagerplätzen 21 an die jeweiligen Produktionsvorrichtungen 11, 12 und die oder jede Station 14 zum Ändern des Füllstandes der Ladegutträger 15 an. Alle Produktionsvorrichtungen 11, 12 und alle Stationen 14 zum Ändern des Füllstandes der Ladegutträger 15 sind durch ein Transportfahrzeug 20 erreichbar, so dass die Transportfahrzeuge 20 den unterbrechungsfreien bzw. lückenlosen Transportfluss innerhalb der Anordnung 10 sicherstellen.

Im Weiteren werden weitere Merkmale und Ausführungsformen zur Anordnung 10 beschrieben, die jeweils für sich in Verbindung mit der erfindungsgemäßen und weiter oben beschriebenen Ausführung oder miteinander kombiniert in Verbindung mit der erfindungsgemäßen und weiter oben beschriebenen Ausführung die Anordnung 10 optional erfindungsgemäß weiterbilden.

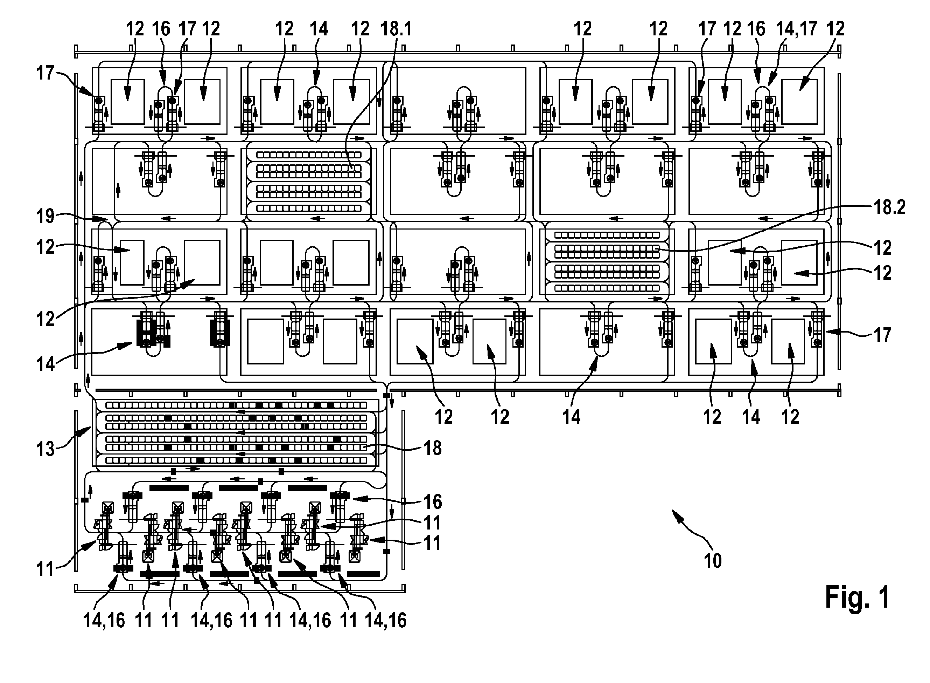

Die Anordnung 10 gemäß Figur 1 umfasst mehrere Produktionsvorrichtungen 11 zum Herstellen von Zwischenprodukten und mehrere Produktionsvorrichtungen 12 zum Herstellen von Fertigprodukten. Rein beispielhaft sind die Produktionsvorrichtungen 11 zum Herstellen der Zwischenprodukte Produktionslinien für Filterstäbe und Multisegmentfilter. Im gleichen Beispiel sind die Produktionsvorrichtungen 12 zum Herstellen der Fertigprodukte Produktionslinien für Filterzigaretten. In einem anderen Beispiel können die Produktionsvorrichtungen 11 zum Herstellen der Zwischenprodukte auch Produktionslinien für Filtersegmente sein, während die Produktionsvorrichtungen 12 zum Herstellen der Fertigprodukte Produktionslinien für Multisegmentfilter sind. Ein weiteres, nicht abschließendes Beispiel kann Produktionslinien für Filterzigaretten als Produktionsvorrichtungen 11 zum Herstellen von Zwischenprodukten zeigen, während Produktionslinien zum Verpacken der Filterzigaretten die Produktionsvorrichtungen 12 zum Herstellen der Fertigprodukte bilden.

Die Produktionsvorrichtungen 11 zum Herstellen der Zwischenprodukte sind auf einer ersten Seite eines ersten Lagerregals 18 angeordnet. Sämtliche Produktionsvorrichtungen 12 zum Herstellen der Fertigprodukte sind auf der gegenüberliegenden Seite des Lagerregals 18 angeordnet. Im Bereich der Produktionsvorrichtungen 12 zum Herstellen der Fertigprodukte sind weitere Lagerregale 18.1, 18.2 angeordnet. Die Verteilung der Produktionsvorrichtungen 11, 12 kann aber auch anders vorgesehen sein. So können z.B. auch alle Produktionsvorrichtungen 11, 12 auf einer Seite des Lagerregals 18 angeordnet sein. Auch eine beliebige Verteilung der Produktionsvorrichtungen 11, 12 zu beiden Seiten des Lagerregals 18 ist denkbar.

Im gezeigten Ausführungsbeispiel ist das Speicher- und Transportsystem 13 ein Schragentransportsystem für Schragengruppen mit wenigsten zwei bis acht, vorzugsweise jedoch vier Schragen. Die Anzahl der Produktionsvorrichtungen 11, 12 sowie deren Ausbildung und Anordnung kann ebenso variieren wie die Ausbildung des Speicher- und Transportsystems 13. Vorzugsweise jeder Produktionsvorrichtung 11, 12 ist eine Station 14 zum Ändern des Füllstandes der Ladegutträger 15 zugeordnet. Dies kann entweder eine Befüllstation 16 und/oder eine Entleerstation 17 sein.

Entlang des Schienennetzes 19 sind mehrere Lagerregale 18, 18.1, 18.2 angeordnet. Die Anzahl und Position der Lagerregale 18 kann ebenfalls variieren. Mindestens einem, vorzugsweise jedoch jedem Lagerregal 18 ist eine Lifteinrichtung 22 zugeordnet. Es besteht auch die Option, jedem Gang 23 eines Lagerregals 18 eine eigene Lifteinrichtung 22 oder mehrere Lifteinrichtungen 22 zuzuordnen. Die Lifteinrichtungen 22 sind ebenfalls an das Schienennetz 19 angebunden oder eingebunden, so dass die Transportfahrzeuge 20 vom Schienennetz 19 auf die Lifteinrichtung 22 und zurück verfahrbar sind.

Die Transportfahrzeuge 20 sind ferngesteuert und schienengebunden ausgebildet. Mit anderen Worten ist jedes Transportfahrzeug 20 leitungs- und kabelfrei unabhängig und selbständig frei mittels einer Funkfernsteuerung verfahrbar, wodurch die Verfahr-/Transportwege quasi frei wählbar sind. Insbesondere ermöglicht die ferngesteuerte und schienengebundene Ausbildung besonders einfach das Überwinden von Distanzen in vertikaler Richtung, also das Verfahren von einer Ebene in eine darüber oder darunterliegende Ebene mittels der Lifteinrichtung 22, sowie von Gang 23 zu Gang 23. Bezüglich der Energieversorgung ist jedes Transportfahrzeug 20 bevorzugt autark ausgebildet, beispielsweise mittels eines Akkumulators. Bevorzugt ist die Energieversorgung mittels Hochleistungsbatterien und Hochleistungskondensatoren sichergestellt. Ein vorteilhafter Spannungsbereich liegt zwischen 24V und 60V und besonders bevorzugt zwischen 42V und 48V. Andere Spannungsbereiche sind aber ebenfalls möglich. Selbstverständlich kann die Energieversorgung auch zentral erfolgen. Zum Aufladen der Akkumulatoren der Transportfahrzeuge 20 ist dem Schienennetz 19 mindestens eine Ladestation 24 zugeordnet. Vorzugsweise sind jedoch mehrere Ladestationen 24 vorgesehen, wobei die Ladestationen 24 bevorzugt an Halteabschnitten im Schienennetz 19 vorgesehen. Diese Halteabschnitte können z.B. im Bereich der Lifteinrichtungen 22, an Bereitstellungszonen für leere Transportfahrzeuge 20 oder im Bereich von weiter unten beschriebenen Pufferspeichern 25 ausgebildet sein. Vorzugsweise ist die elektrische Verbindung zwischen dem aufzuladenden Transportfahrzeug 20 und der Ladestation 24 automatisch herstellbar.

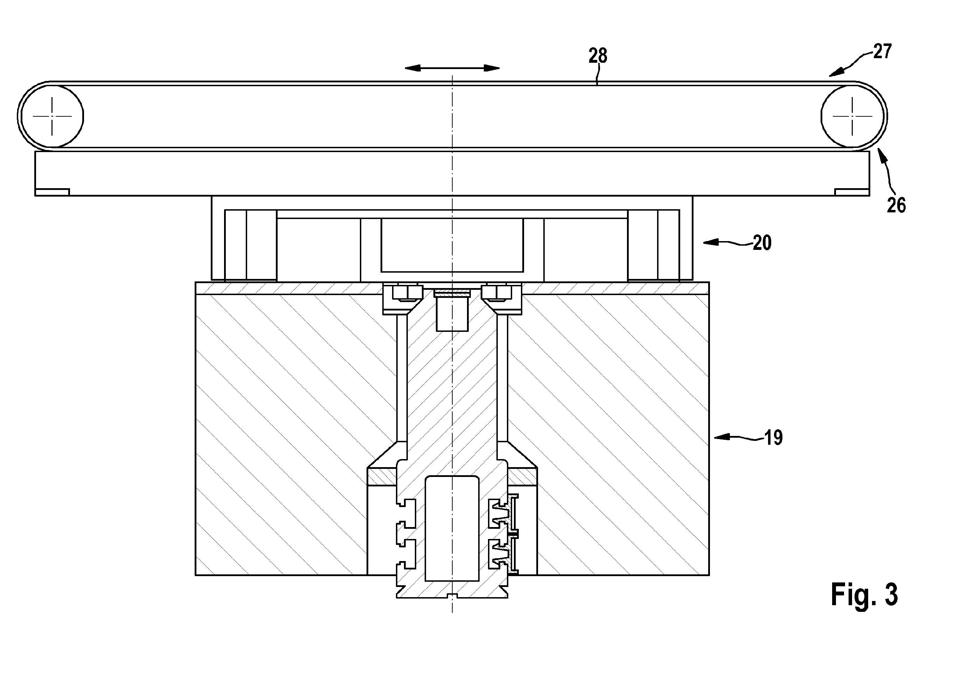

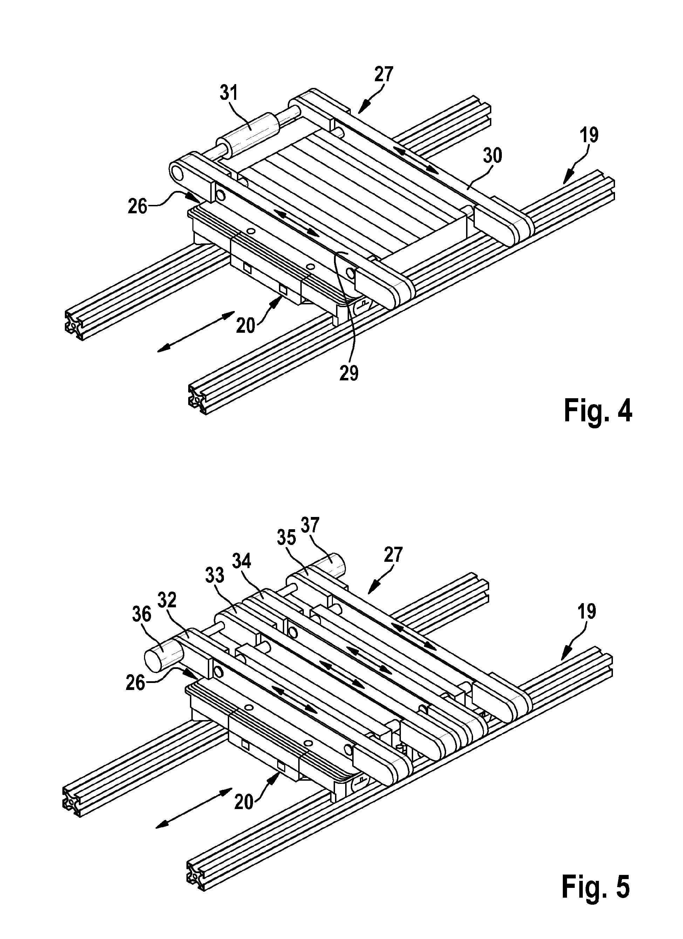

Die Transportfahrzeuge 20 sind als Lastenträger ausgebildet und weisen auf der dem Schienennetz 19 abgewandten Oberseite 26 einen Querförderer 27 zum Aufnehmen und Abgeben der Ladegutträger 15 quer zur Fahrtrichtung des Transportfahrzeugs 20 auf. Der Querförderer 27 kann z.B. ein umlaufender Bandförderer 28 sein (siehe z.B. Figur 3). In den Figuren 4 und 5 sind weitere bevorzugte Ausführungsformen des Querförderers 27 dargestellt. Der Querförderer 27 kann z.B. zwei beabstandet zueinander angeordnete Förderbänder 29, 30 aufweisen, die über einen gemeinsamen Antrieb 31 synchron antreibbar sind. Der Querförderer 27 kann aber auch z.B. vier Förderbänder 32, 33, 34, 35 aufweisen, wobei jeweils zwei benachbarte Förderbänder 32, 33; 34, 35 mit einem Antrieb 36, 37 antreibbar sind. Die letztgenannte Variante ermöglicht dabei ein gleichzeitiges Querfördern in entgegen gesetzter Richtung.

Das Verfahren der Transportfahrzeuge 20 erfolgt auf dem Schienennetz 19. Dabei kann das Schienennetz 19 als Einschienensystem oder Zweischienensystem ausgebildet sein. Dem Schienennetz 19 kann optional auch eine Stromschiene für die Energieversorgung der Transportfahrzeuge 20 zugeordnet sein. Bevorzugt ist ein Zweischienensystem mit autarker Energieversorgung, also ohne Stromschiene. Man kann die beiden Varianten, also Einschienensystem und Zweischienensystem auch miteinander kombinieren. Entsprechendes gilt auch für die Energieversorgung.

Optional ist einer oder jeder Produktionsvorrichtung 11 zum Herstellen der Zwischenprodukte der Tabak verarbeitenden Industrie und/oder einer oder jeder Produktionsvorrichtung 12 zum Herstellen der Fertigprodukte der Tabak verarbeitenden Industrie und/oder einer oder jeder Station 14 zum Ändern des Füllstandes der Ladegutträger 15 direkt und unmittelbar benachbart ein Pufferspeicher 25 für Ladegutträger 15 zugeordnet. Anders ausgedrückt sind an den einzelnen Produktionsvorrichtungen 11, 12 und den Stationen 14 jeweils benachbart Zwischenspeicher vorgesehen, in denen eine Gruppe von Ladegutträgern 15 für den schnellen Zugriff und die schnelle Verfügbarkeit temporär gelagert werden können. Bevorzugt ist der Pufferspeicher 25 ein an das Schienennetz 19 angeschlossener und von dem oder jedem Transportfahrzeug 20 befahrbarer Schienenabschnitt 38. Auf diesen so genannten Abstellgleisen des Schienennetzes 19 können ein oder mehrere Transportfahrzeuge 20 mit vollen oder leeren Ladegutträgern 15 auf ihren Einsatz warten. Bevorzugt ist neben jeder Produktionsvorrichtung 11, 12 und/oder neben jeder Station 14 ein solcher Fahrstreckenabschnitt vorgesehen, auf dem mindestens ein Transportfahrzeug 20, das auch als "Shuttle" bezeichnet wird, steht. Zusätzliche Pufferspeicher können als einfache und passive Stellplätze für Ladegutträger 15 ein- oder beidseitig der Fahrwege ausgebildet sein, wobei die Ladegutträger 15 vorzugsweise auf einem Tablett oder einer anderen geeigneten Unterlage gruppiert sind.

Wie erwähnt, umfasst die Anordnung 10 ein Logistik-System, innerhalb dem die Ladegutträger 15 automatisch gehandhabt werden. Der Transport der Ladegutträger 15 auf den Transportfahrzeugen 20 entlang des Schienennetzes 19 ist durch das Einschienen- oder Zweischienensystem und die ferngesteuerter und schienengebundenen Transportfahrzeuge 20 sichergestellt. Für die Übergabe der Ladegutträger 15 von den Transportfahrzeugen 20 an die Stationen 14 oder auf die Produktionsvorrichtungen 11, 12 ist optional ein Übergabemodul 39 vorgesehen. Mit anderen Worten ist vorzugsweise einer oder jeder Produktionsvorrichtung 11 zum Herstellen der Zwischenprodukte und/oder einer oder jeder Produktionsvorrichtung 12 zum Herstellen der Fertigprodukte und/oder jeder Station 14 zum Ändern des Füllstandes der Ladegutträger 15 ein Übergabemodul 39 zur Anbindung an das Schienennetz 19 zugeordnet. Das Übergabemodul 39 ist ein Bindeglied zwischen dem Schienennetz 19 bzw. den dem Schienennetz 19 zugeordneten Lifteinrichtungen 22 sowie den Transportfahrzeugen 20 einerseits und insbesondere den Stationen 14 zum Entleeren und/oder Befüllen der Ladegutträger 15 andererseits.

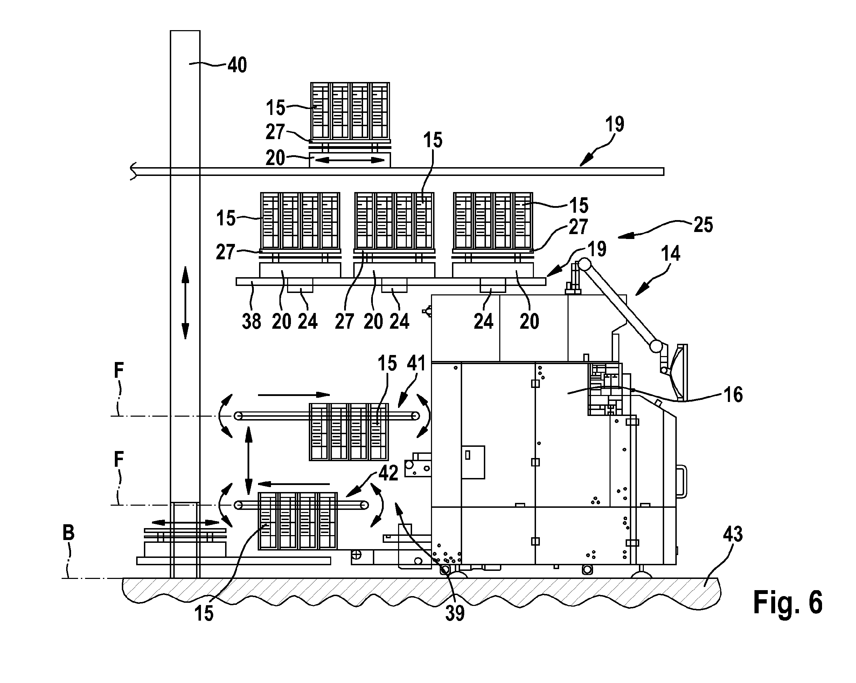

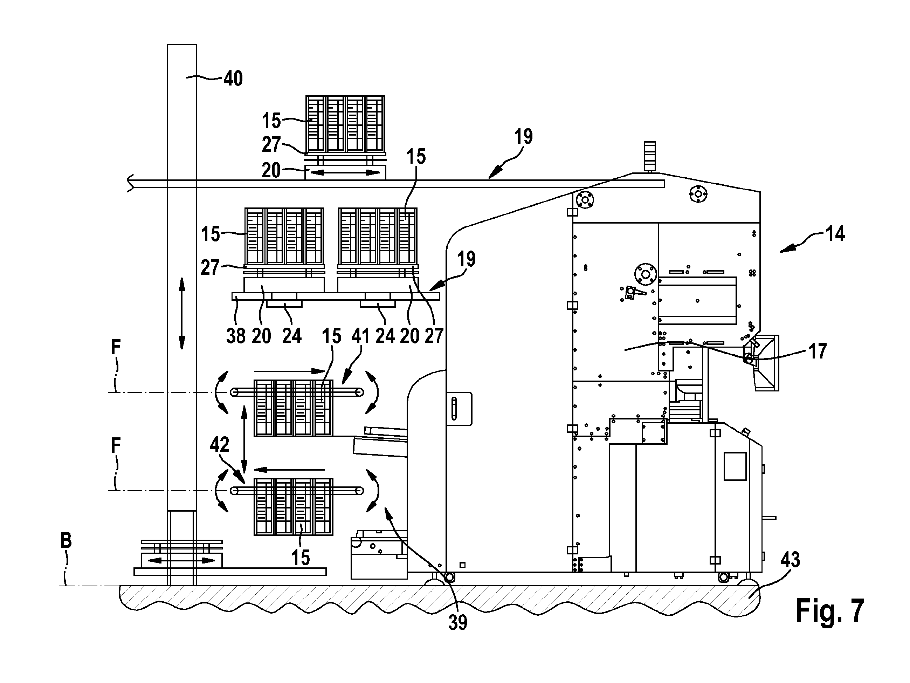

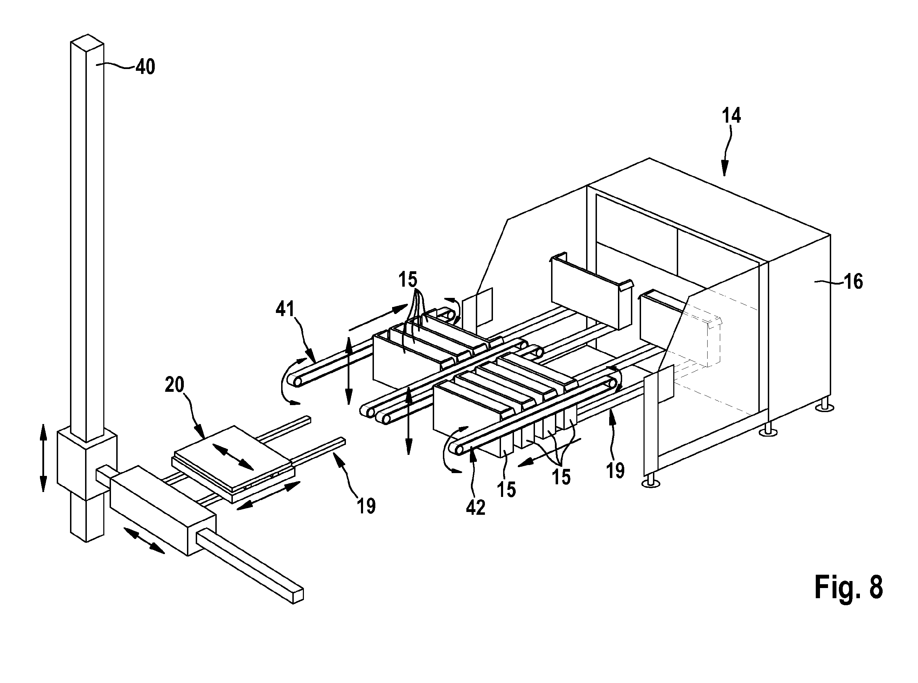

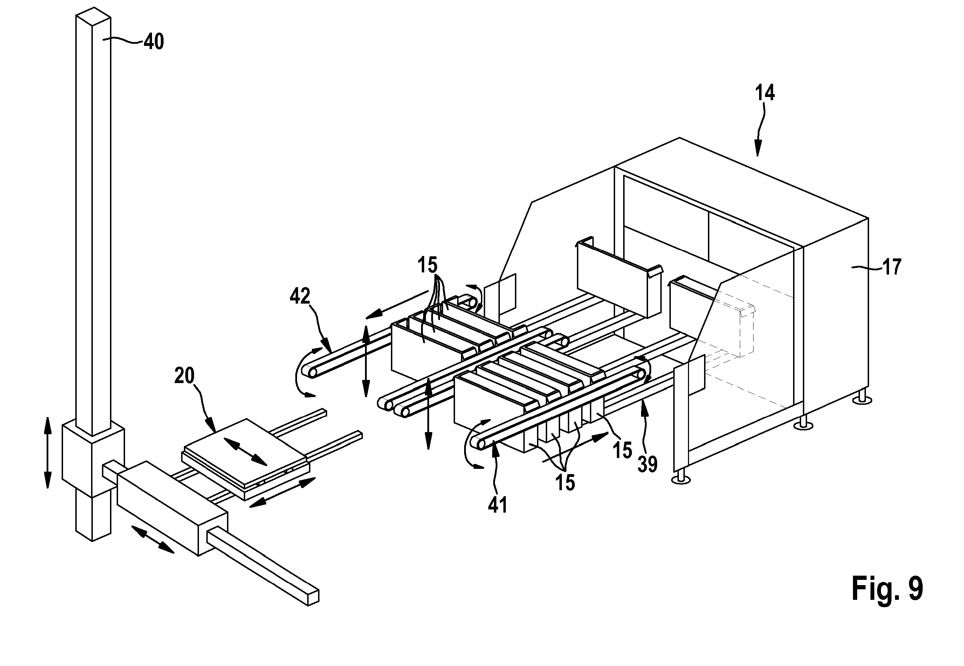

Jedes Übergabemodul 39 umfasst zwei übereinander angeordnete Förderelemente 41, 42, die jeweils liftartig auf und ab bewegbar ausgebildet sind. Die beiden Förderelemente 41, 42 sind in der Ausführungsform gemäß der Figuren 6 und 7 vertikal beabstandet zueinander und können parallel zueinander oder geneigt zueinander verlaufen. Vorzugsweise ist das oder jedes Förderelement 41, 42 ein umlaufender Transportförderer, der zur hängenden Aufnahme der Ladegutträger 15 ausgebildet und eingerichtet ist. Jedes der Förderelemente 41, 42 ist vorzugsweise schwenkbar ausgebildet, derart, dass die Neigung der Förderebene F zur horizontalen Ebene B des Bodens 43 verstellbar ist. Die Transportförderer können endlos umlaufende Transportbänder oder -ketten sein, die aktiv angetrieben sind. Zur hängenden Aufnahme der Ladegutträger 15 weisen die Transportförderer Aufnahmen auf, die mit korrespondierenden Vorsprüngen, beispielsweise Bolzen, an den Ladegutträgern 15 in Eingriff bringbar sind. In einer weiteren Ausführungsform gemäß der Figuren 8 und 9 sind die Förderelemente 41, 42 nebeneinander angeordnet, wobei die Förderelemente 41, 42 in gleicher Weise, wie bereits zu der anderen Ausführungsform beschrieben, vertikal und in der Neigung verstellbar ausgebildet sind.

Vor der Übernahme der Ladegutträger 15 von einem Transportfahrzeug 20 oder einem Zuförderer oder Abförderer einer Station 14 zum Ändern des Füllstandes der Ladegutträger 15 sind die Transportförderer mit ihren Aufnahmen unterhalb der Vorsprünge der Ladegutträger 15 angeordnet. Zum Abheben der Ladegutträger 15 von einem Transportfahrzeug 20 oder einem Zuförderer oder Abförderer einer Station 14 zum Ändern des Füllstandes der Ladegutträger 15 ist der Transportförderer vertikal nach oben bewegbar, so dass die Ladegutträger 15 an dem Transportförderer hängen. Das Absetzen der Ladegutträger 15 erfolgt in umgekehrter Weise. Durch den aktiven Antrieb der Transportförderer einerseits und den aktiven Antrieb der Zuförderer oder Abförderer der Stationen 14 zum Befüllen oder Entleeren der Ladegutträger 15 andererseits sowie den Querförderer 27 auf dem Transportfahrzeug 20 ist die Übergabe der Ladegutträger 15 an die Transportförderer und von den Transportförderern sichergestellt.

Durch die Einstellbarkeit der Neigung der Transportförderer sind diese an die jeweilige Neigung der Zuförderer oder Abförderer der Befüllstationen 16 und Entleerstationen 17 sowie die horizontale Ausrichtung der Transportfahrzeuge 20 bzw. deren Querförderer 27 anpassbar. Die Neigungsverstellung kann einseitig oder beidseitig vorgesehen sein. Selbstverständlich kann das Übergabemodul 39 auch direkt eine Anbindung zwischen dem Speicher- und Transportsystem 13 bzw. den zugehörigen Transportfahrzeugen 20 einerseits und den Produktionsvorrichtungen 11, 12 andererseits schaffen.

In nicht gezeigten Ausführungsformen können den Ladegutträgern 15 und insbesondere den Schragen bzw. Schragengruppen Abdeckungen, beispielsweise in Form von Hauben oder dergleichen zugeordnet sein, um den Inhalt der Ladegutträger 15 u.a. gegen Austrocknen und/oder gegen Deflavourisieren zu schützen. Durch die Abdeckung oder Haube kann in den Ladegutträgern 15 ein Mikroklima gebildet werden. Besonders vorteilhaft ist eine solche (nicht dargestellte) Abdeckung z.B. für Mentholzigaretten, um einen Aromaverlust zu vermeiden oder weitestgehend zu verhindern. Im Falle einer Nutzung solcher Abdeckungen ist vorzugsweise im Bereich der Übergabemodule 39 eine Handhabungseinrichtung zum Abnehmen und Aufsetzen der Abdeckungen vorgesehen.

Der Anordnung 10 ist auch mindestens eine Steuerung zugeordnet. Vorzugsweise sind mehrere Steuerungen vorgesehen. Eine Hauptsteuerung kann z.B. eine Auftragssteuerung, eine Produktanforderungssteuerung, ein Transportfahrzeugidentifizierungs- und verfolgungssystem, eine Produkttransportzeit- und - lagerzeitüberwachung sowie optional eine Ladezustandsüberwachung für die Akkumulatoren umfassen. Mittels der Hauptsteuerung lassen sich auch die einzelnen Transportfahrzeuge 20 fernsteuern. Vorzugsweise erfolgt die Signal- und Datenübertragung zwischen den Steuerungen und den Transportfahrzeugen 20 drahtlos.

Die Energieversorgung der Ladestationen 24 kann optional über regenerative Energien, also z.B. Wind oder Sonne erfolgen. Anders ausgedrückt ist es vorteilhaft möglich, die Ladestationen 24 direkt an Generatoren zur Stromerzeugung aus regenerativen Energiequellen anzuschließen. Beispielsweise besteht die Möglichkeit, auf dem Dach der Fabrik, in der eine erfindungsgemäße Anordnung 10 aufgebaut ist, Photovoltaikzellen, also z.B. Solarzellen oder Dünnschichtsolarzellen, anzuordnen und diese direkt an das Speicher- und Transportsystem 13 anzuschließen, beispielsweise durch Leitungen von oben in Stützen 40 der Lagerregale 18, 18.1, 18.2. An diesen Stützen 40, an denen vorzugsweise die Lifteinrichtungen 22 auf und ab fahren, sind bevorzugt auch Halteabschnitte mit Ladestationen 24 einzurichten, an denen die Akkumulatoren der Transportfahrzeuge 20 aufgeladen werden können. Damit ist nicht nur eine umweltschonende Energieversorgung der Anordnung 10 gewährleistet. Durch die Anbindung der Energieversorgung von oben ist auch keine störende Leitungsanordnung am Boden oder innerhalb des Speicher- und Transportsystems 13 notwendig. Anders ausgedrückt ist die Anbindung an regenerative Energiequellen unabhängig vom Layout der Anordnung 10 auf einfache Weise und flexibel möglich.

Innerhalb der Anordnung 10 können demnach durch die erfindungsgemäße Ausbildung sowohl Zwischenprodukte und Fertigprodukte in Ladegutträgern 15 von einer Produktionsvorrichtung 11, 12, üblicherweise über eine Station 14 zum Ändern des Füllstandes der Ladegutträger 15, an einen Speicherplatz des Speicher- und Transportsystems 13 und umgekehrt als auch Materialien, die bei der Herstellung der Zwischenprodukte und Fertigprodukte erforderlich sind, von einem Speicherplatz des Speicher- und Transportsystems 13 an die Produktionsvorrichtungen 11, 12 transportiert werden, ohne das Bedienpersonen eingreifen müssen.

## Patentansprüche

1. Anordnung (10) zum Herstellen, Speichern und Transportieren von Produkten der Tabak verarbeitenden Industrie, umfassend mindestens eine Produktionsvorrichtung (11) zum Herstellen von Zwischenprodukten der Tabak verarbeitenden Industrie, mindestens eine Produktionsvorrichtung (12) zum Herstellen von Fertigprodukten der Tabak verarbeitenden Industrie, ein Speicher- und Transportsystem (13), das zum Speichern und Transportieren von zur Herstellung von Produkten der Tabak verarbeitenden Industrie erforderlichen Materialien und/oder von hergestellten Zwischenprodukten und/oder Fertigprodukten der Tabak verarbeitenden Industrie in oder auf Ladegutträgern (15) innerhalb der Anordnung (10) ausgebildet und eingerichtet ist, und mindestens eine Station (14) zum Ändern des Füllstandes der Ladegutträger (15), wobei das Speicher- und Transportsystem (13) die mindestens eine Produktionsvorrichtung (11) zum Herstellen von Zwischenprodukten der Tabak verarbeitenden Industrie, die mindestens eine Produktionsvorrichtung (12) zum Herstellen von Fertigprodukten der Tabak verarbeitenden Industrie und die mindestens eine Station (14) zum Ändern des Füllstandes der Ladegutträger (15) miteinander verbindet, **dadurch gekennzeichnet, dass** das Speicher- und Transportsystem (13) als Überkopf-System ausgebildet ist und neben mindestens einem Lagerregal (18) zur Aufnahme mindestens eines Ladegutträgers (15) ein Schienennetz (19) sowie mindestens ein auf dem Schienennetz (19) selbständig verfahrbares Transportfahrzeug (20) umfasst, wobei das oder jedes Transportfahrzeug (20) zur Aufnahme und Abgabe der Ladegutträger (15) oberhalb der Schienenebene ausgebildet ist, und dass das oder jedes Transportfahrzeug (20) ferngesteuert und schienengebunden ausgebildet ist.

2. Anordnung nach Anspruch 1, **dadurch gekennzeichnet, dass** entlang des Schienennetzes (19) mehrere Lagerregale (18,18.1,18.2) angeordnet sind, wobei jedem Lagerregal (18, 18.1, 18.2) mindestens eine Lifteinrichtung (22) zugeordnet ist.

3. Anordnung nach einem der Ansprüche 1 bis 3, **dadurch gekennzeichnet, dass** jedes Transportfahrzeug (20) bezüglich seiner Energieversorgung autark, beispielsweise mittels eines Akkumulators, ausgebildet ist, und dass dem Schienennetz (19) mindestens eine Ladestation (24) für das oder jedes Transportfahrzeug (20) zugeordnet ist.

4. Anordnung nach einem der Ansprüche 1 bis 5, **dadurch gekennzeichnet, dass** jedes Transportfahrzeug (20) auf seiner dem Schienennetz (19) abgewandten Oberseite (26) einen Querförderer (27) zum Aufnehmen und Abgeben der Ladegutträger (15) quer zur Fahrtrichtung des Transportfahrzeugs (20) aufweist.

5. Anordnung nach einem der Ansprüche 1 bis 6, **dadurch gekennzeichnet, dass** das Schienennetz (19) wahlweise als Einschienen- oder Zweischienensystem ausgebildet ist.

6. Anordnung nach einem der Ansprüche 1 bis 7, **dadurch gekennzeichnet, dass** das Schienennetz (19) eine Stromschiene umfasst.

7. Anordnung nach einem der Ansprüche 1 bis 8, **dadurch gekennzeichnet, dass** einer oder jeder Produktionsvorrichtung (11) zum Herstellen von Zwischenprodukten der Tabak verarbeitenden Industrie und/oder einer oder jeder Produktionsvorrichtung (12) zum Herstellen von Fertigprodukten der Tabak verarbeitenden Industrie und/oder einer oder jeder Station (14) zum Ändern des Füllstandes der Ladegutträger (15) direkt und unmittelbar benachbart ein Pufferspeicher (25) für Ladegutträger (15) zugeordnet ist.

8. Anordnung nach Anspruch 9, **dadurch gekennzeichnet, dass** die Pufferspeicher (25) jeweils als Stellplatz für Ladegutträger (15) und/oder als an das Schienennetz (19) angeschlossener und von dem oder jedem Transportfahrzeug (20) befahrbarer Schienenabschnitt (38) ausgebildet sind.

9. Anordnung nach einem der Ansprüche 1 bis 10, **dadurch gekennzeichnet, dass** die Ladegutträger (15) Schragen zur Aufnahme stabförmiger Artikel sind und das Speicher- und Transportsystem (13) als Schragenspeicher- und Schragentransportsystem für aus mindestens zwei Schragen gebildeten Schragengruppen, welche auf einer gemeinsamen Unterlage angeordnet sind, ausgebildet und eingerichtet ist.

10. Anordnung nach einem der Ansprüche 1 bis 11, **dadurch gekennzeichnet, dass** einer oder jeder Produktionsvorrichtung (11) zum Herstellen von Zwischenprodukten der Tabak verarbeitenden Industrie und/oder einer oder jeder Produktionsvorrichtung (12) zum Herstellen von Fertigprodukten der Tabak verarbeitenden Industrie und/oder einer oder jeder Station (14) zum Ändern des Füllstandes der Ladegutträger (15) ein Übergabemodul (39) zur Anbindung an das Schienennetz (19) zugeordnet ist.

11. Anordnung nach Anspruch 12, **dadurch gekennzeichnet, dass** das Übergabemodul (39) zwei übereinander angeordnete Förderelemente (41, 42) umfasst, die jeweils liftartig auf und ab bewegbar ausgebildet sind.

12. Anordnung nach Anspruch 12, **dadurch gekennzeichnet, dass** das Übergabemodul (39) zwei nebeneinander angeordnete Förderelemente (41, 42) umfasst, die jeweils liftartig auf und ab bewegbar ausgebildet sind.

13. Anordnung nach Anspruch 13 oder 14, **dadurch gekennzeichnet, dass** ein oder jedes Förderelement (41, 42) ein umlaufender Transportförderer und zur hängenden Aufnahme der Ladegutträger (15) ausgebildet und eingerichtet ist.

14. Anordnung nach einem der Ansprüche 13 bis 15, **dadurch gekennzeichnet, dass** ein oder jedes Förderelement (41, 42) um eine horizontale Achse schwenkbar ausgebildet ist, derart, dass die Neigung der Förderebene F zur horizontalen Ebene B verstellbar ist.

15. Anordnung nach einem der Ansprüche 13 bis 16, **dadurch gekennzeichnet, dass** ein oder jedes Förderelement (41, 42) Ausrichtmittel zum seitlichen Ausrichten der Ladegutträger (15) umfasst.
